# EUROPÄISCHE PATENTANMELDUNG

(11) **EP 3 988 350 A1**
(43) Veröffentlichungstag der Anmeldung: **27.04.2022**
(21) Anmeldenummer: 21203450.8
(22) Anmeldetag: 19.10.2021
(51) Int. Cl.: B60D 1/60

(54) **VORRICHTUNG ZUM FIXIEREN UND ZUM FREIGEBEN EINES FAHRZEUGANHÄNGERS UND SYSTEM MIT VORRICHTUNG UND FAHRZEUGANHÄNGER**

(30) Priorität: 22.10.2020 DE 202020106039 U
(71) Anmelder: Traxi Sharing GmbH, 45883 Gelsenkirchen (DE)
(72) Erfinder: SCHREIDER, Vitalij, 45897 Gelsenkirchen (DE); AKISHIN, Iakov, 45883 Gelsenkirchen (DE)
(74) Vertreter: Cohausz & Florack

(57) **Zusammenfassung**

Dargestellt und beschrieben ist eine Vorrichtung (1) zum ortsfesten Fixieren und zum Freigeben eines Fahrzeuganhängers (2), mit einem ersten Kupplungselement (3), insbesondere aufweisend eine Kupplungskugel (4), das mit einem zweiten Kupplungselement (9), insbesondere aufweisend eine Kupplungspfanne (10), eines Fahrzeuganhängers (2) lösbar verbindbar ist. Um das Fixieren und Freigeben zu erleichtern wird die Vorrichtung (1) ergänzt durch eine Fixiereinrichtung (11) zum ortsfesten Fixieren und zum Freigeben des Fahrzeuganhängers (2), insbesondere des zweiten Kupplungselements (9) des Fahrzeuganhängers (2). Dargestellt und beschrieben ist zudem ein System (34) zum ortsfesten Fixieren und zum Freigeben eines Fahrzeuganhängers (2).

## Beschreibung

Die Erfindung betrifft eine Vorrichtung zum ortsfesten Fixieren und zum Freigeben eines Fahrzeuganhängers, mit einem ersten Kupplungselement, insbesondere aufweisend eine Kupplungskugel, das mit einem zweiten Kupplungselement, insbesondere aufweisend eine Kupplungspfanne, eines Fahrzeuganhängers lösbar verbindbar ist.

Die Erfindung betrifft ferner ein System mit einer Vorrichtung und einem Fahrzeuganhänger.

Fahrzeuganhänger und andere verfahrbare Gegestände wie Wohnwagen und dergleichen sollten gesichert werden, damit sie nicht wegrollen oder unbefugt benutzt oder gestohlen werden können. Beispielsweise kann ein Fahrzeuganhänger abgestellt und mit einer ortsfest angeordneten Kupplungskugel, wie beispielsweise aus der DE 24 07 692 A1 bekannt ist, lösbar verbunden werden bzw. an diese angekuppelt werden. Eine derartige Kupplungsverbindung kann durch Vorrichtungen wie Schlösser gesichert werden, da ansonsten ein Abkuppeln durch Unbefugte möglich ist.

Bei dem Einsatz zahlreicher Fahrzeuganhänger (z.B. bei einer Anhängervermietung oder einer Spedition) wäre es jedoch sehr aufwändig, wenn die Sicherung und Entsicherung - also Freigabe - der Anhänger manuell durchgeführt werden müsste. Neben den hohen Kosten ist für den Kunden bzw. Nutzer störend, dass es bei manueller Sicherung und Entsicherung der Anhänger zu Wartezeiten kommen kann.

Der vorliegenden Erfindung liegt daher die Aufgabe zugrunde, die zuvor genannten Nachteile bekannter Vorgehensweisen zu vermeiden oder aber zumindest zu reduzieren. Insbesondere ist es die Aufgabe der vorliegenden Erfindung, eine Vorrichtung und ein System bereitzustellen, mit denen das Fixieren und Freigeben von Fahrzeuganhängern vereinfacht wird.

Bei der eingangs beschriebenen Vorrichtung sowie bei dem eingangs beschriebenen System wird diese Aufgabe dadurch gelöst, dass die Vorrichtung eine Fixiereinrichtung zum ortsfesten Fixieren und zum Freigeben des Fahrzeuganhängers, insbesondere des zweiten Kupplungselements des Fahrzeuganhängers, aufweist.

Die Erfindung betrifft eine Vorrichtung zum ortsfesten Fixieren und zum Freigeben eines Fahrzeuganhängers, mit einem ersten Kupplungselement, insbesondere aufweisend eine Kupplungskugel, das mit einem zweiten Kupplungselement, insbesondere aufweisend eine Kupplungspfanne, eines Fahrzeuganhängers lösbar verbindbar ist.

Mechanische Verbindungseinrichtungen sind beispielsweise in der "Richtlinie 94/20/EG des Europäischen Parlaments und des Rates vom 30. Mai 1994 über mechanische Verbindungseinrichtungen von Kraftfahrzeugen und Kraftfahrzeuganhängern sowie ihre Anbringung an diesen Fahrzeugen" beschrieben. Das erste Kupplungselement und/oder das zweite Kupplungselement können gemäß und/oder in Anlehnung an diese Richtlinie ausgebildet sein. Insbesondere das erste Kupplungselement kann aber auch abweichend ausgebildet sein (beispielsweise kann es ein einfacher Stab sein), da es viele Eigenschaften von einem ersten Kupplungselement, das typischerweise an einem bewegten Zugfahrzeug (bzw. Kraftfahrzeug) angeordnet wird, wegen des stationären Charakters der Vorrichtung nicht aufweisen muss. Denn anders als bei einem Gespann aus Zugfahrzeug und Fahrzeuganhänger treten bei der stationären Vorrichtung kein für einen dynamischen Fahrbetrieb typischen Kräfte und Beschleunigungen auf.

Unter einem Fahrzeuganhänger kann jeder nicht-motorisierte bewegliche bzw. verfahrbare Gegenstand mit wenigstens einer Fahrzeugachse verstanden werden, der für den Gebrauch zusammen mit einem insbesondere motorisierten und/oder antreibbaren Zugfahrzeug geeignet ist. Als Fahrzeuganhänger werden also Fahrzeuge bezeichnet, die keinen eigenen Motor bzw. Antrieb aufweisen, aber beispielsweise eine Ladefläche. Fahrzeuganhänger sind bevorzugt dazu ausgebildet, hinter angetriebenen Zugfahrzeugen wie Pkw, Lkw, Omnibussen, Traktoren, Krafträdern oder Zweirädern mitgeführt zu werden. Fahrzeuganhänger können als Lastenanhänger, Fahrzeugtransportanhänger und/oder Wohnwagen bzw. Wohnanhänger ausgebildet sein. Dabei sind Fahrzeuganhänger besonders bevorzugt mit einem Zugfahrzeug, beispielsweise mit dessen (erstem) Kupplungselement, insbesondere aufweisend eine Kupplungskugel, lösbar verbindbar. Das lösbare Verbinden kann mit Begriffen wie "Ankuppeln", "Kuppeln" und/oder "Anhängen" bezeichnet werden.

Vorteilhaft an der erfindungsgemäßen Lösung ist, dass eine Möglichkeit geschaffen wird, einen Fahrzeuganhänger an einem Ort, an dem die Vorrichtung ortsfest angeordnet ist, lösbar anzubringen und den Fahrzeuganhänger dabei ortsfest zu fixieren. Durch die Fixiereinrichtung ist es möglich geworden, einen Fahrzeuganhänger unkompliziert und ohne viele Handgriffe gegen unbefugte Nutzung und Diebstahl abzusperren. Insbesondere können Unternehmen bei der Vermietung von Fahrzeuganhängern auf eine derartige Vorrichtung bzw. ein derartiges System zugreifen, mit dem ohne großen Personalaufwand und zugleich mit hoher Integrationsmöglichkeit in digitale Verkaufs- und/oder Organisations-Systeme eine Vermietung von Fahrzeuganhängern möglich ist. Die Erfindung schafft aufgrund ihrer Einfachheit und Robustheit eine kostengünstige Möglichkeit, stationsgebundenes und weitgehend automatisiertes Vermieten von Fahrzeuganhängern - also letztlich "Trailer-Sharing" analog zum "Car-Sharing" - anzubieten.

Nach einer Ausgestaltung der Vorrichtung ist vorgesehen, dass das insbesondere eine Kupplungskugel aufweisende erste Kupplungselement zum lösbaren Verbinden mit dem zweiten Kupplungselement einen insbesondere kugelkalottenförmigen oberen Abschnitt aufweist, der zumindest im Wesentlichen einen Durchmesser zwischen 40 mm und 60 mm, bevorzugt zwischen 45 mm und 55 mm, insbesondere von etwa 50 mm aufweist, und/oder einen insbesondere zylindrischen unteren Abschnitt aufweist, der zumindest im Wesentlichen einen Durchmesser bis zu 35 mm aufweist, insbesondere 29 +/- 2 mm beträgt.

Der obere Abschnitt des Kupplungselements ist bevorzugt als Kugelschicht bzw. Kugelscheibe gebildet, wobei eine untere Ebene und eine dazu parallele obere Ebene die Kugelschicht eingrenzen. Die untere Ebene des oberen Abschnitts ist bevorzugt verbunden mit bzw. angeordnet auf einem zylindrischen unteren Abschnitt des Kupplungselements, wobei der untere Abschnitt einen Durchmesser von bis zu 35 mm, vorzugsweise von etwa 29 mm aufweist. Insbesondere sind oberer Abschnitt und unterer Abschnitt einstückig ausgebildet, d. h. beispielsweise aus einem Vollmaterial herausgearbeitet. Die Verbindung zwischen oberem Abschnitt und unterem Abschnitt ist bevorzugt mit einem umlaufenden Verbindungsradius versehen, der insbesondere wenigstens 3 mm beträgt. Die untere Ebene ist insbesondere vom Mittelpunkt des oberen Abschnitts (beispielsweise als mathematischer Mittelpunkt der umhüllenden Kreisform) mindestens etwa 15 mm beabstandet. Vorteilhaft an dieser Ausgestaltung ist, dass das erste Kupplungselement ein handelsübliches Bauteil sein kann, das als Massenware kostengünstig zu erwerben ist und das eine hohe Kompatibilität mit üblichen zweiten Kupplungselementen aufweist.

Mit anderen Worten kann das erste Kupplungselement eine Kupplungskugel bzw. einen Kugelkopf mit einem zumindest näherungsweise kugelförmigen Aufnahmeteil als oberen Abschnitt und eine Halterung als unteren Abschnitt aufweisen. Das erste Kupplungselement entspricht daher etwa dem Bauteil, das für herkömmliche mechanische Verbindungseinrichtungen zwischen Kraftfahrzeugen und Anhängern, umgangssprachlich auch "Anhängerkupplungen" genannt, typischerweise am Kraftfahrzeug verwendet wird. Das zweite Kupplungselement ist (bzw. weist auf) insbesondere das korrespondierende Teil der vorgenannten mechanischen Verbindungseinrichtung am Fahrzeuganhänger bzw. an dessen Deichsel, nämlich die Zugkugelkupplung, vorzugsweise mit einer hebelartigen Verrastungsvorrichtung zum Verrasten am ersten Kupplungselement. Besonders bevorzugt kann das erste Kupplungselement mithilfe seiner Kupplungskugel mit dem zweiten Kupplungselement mithilfe dessen Zugkugelkupplung an dem Fahrzeuganhänger verbunden werden.

Alternativ hierzu kann das erste Kupplungselement anstelle eines Kugelkopfes auch einen nur teilweise oder gar nicht gerundeten Stab oder ein beliebiges Mittel aufweisen, das dazu ausgebildet und geeignet ist, um mit dem zweiten Kupplungselement einen (wenigstens in horizontaler Richtung wirkenden) Formschluss einzugehen bzw. lösbar mit diesem verbunden zu werden. Letztlich kommt es darauf an, dass das zweite Kupplungselement so an oder in der Vorrichtung positioniert werden kann, dass der Fahrzeuganhänger gegen Wegrollen gesichert ist und dass der Fahrzeuganhänger, insbesondere das zweite Kupplungselement, durch die Fixiereinrichtung fixiert werden kann.

Gemäß einer weiteren Ausgestaltung der Vorrichtung ist vorgesehen, dass die Fixiereinrichtung (insbesondere ein Fixierelement der Fixiereinrichtung) und/oder das erste Kupplungselement derart gelagert sind/ist, dass die Fixiereinrichtung und das erste Kupplungselement relativ zueinander bewegbar sind und, insbesondere zwischen einer Fixierstellung und einer Freigabestellung bewegbar, verschiebbar, schwenkbar sind. Alternativ oder zusätzliche ist eine Federbeaufschlagung durch eine Feder der Fixiereinrichtung und/oder des ersten Kupplungselements möglich, die beispielsweise eine Kraft in Richtung der Fixierstellung ausübt, um eine Bewegung von der Freigabestellung zurück in die Fixierstellung zu erreichen.

Es ist möglich, dass zwischen der Fixiereinrichtung und dem ersten Kupplungselement eine Relativbewegung erzeugt wird, durch die der Abstand zwischen dem ersten Kupplungselement und der Fixiereinrichtung, insbesondere dem Fixierelement, veränderbar ist. So ist es möglich, dass das mit dem ersten Kupplungselement verbundene zweite Kupplungselement des Fahrzeuganhängers allein durch die Relativbewegung fixierbar und freigebbar.

Nach einer weiteren Ausgestaltung der Vorrichtung ist vorgesehen, dass die Fixiereinrichtung ein Fixierelement aufweist, das zwischen einer Fixierstellung und einer Freigabestellung in einer Bewegungsrichtung bewegbar ist, indem es in einem Winkelbereich bzw. Winkel zwischen zwei Stellungen geschwenkt werden kann, insbesondere durch vertikales Abheben des zweiten Kupplungselements des Fahrzeuganhängers von dem ersten Kupplungselement. Zu dieser Ausgestaltung wird weiter vorgeschlagen, dass das Fixierelement derart schwenkbar in der Vorrichtung gehalten bzw. gelagert ist, dass ein Schwenken bzw. Rotieren des Fixierelements auf die Kupplungskugel zu und von der Kupplungskugel weg möglich ist. Die schwenkbare Lagerung des Fixierelements hat den Vorteil einer konstruktiv einfachen und robusten Ausführung, bei der das Fixierelement um eine Drehachse schwenkbar ist, die vorzugsweise waagerecht und in Querrichtung zur Deichsel des Fahrzeuganhängers verläuft. Vorzugsweise ist das Fixierelement schräg oberhalb der Kupplungskugel angeordnet. Auf diese Weise kann das Fixierelement nach oben und "in Fahrtrichtung" des Fahrzeuganhängers weggeschwenkt werden. Dies hat den erheblichen Vorteil, dass das Fixierelement "automatisch" nach schräg oben weggeschwenkt wird, wenn die Kupplungspfanne des Fahrzeuganhängers von der Kupplungskugel abgehoben wird. Die Kupplungspfanne stößt also beim Abheben von der Kupplungskugel an das Fixierelement und schwenkt dieses entlang seiner Bewegungsrichtung schräg nach oben. Dies ist besonders vorteilhaft, da es dem Kunden ermöglicht, die Deichsel des Anhängers in gewohnter Weise (also wie beim An-/Abkuppeln an ein Zugfahrzeug) anzuheben, wobei das Fixierelement automatisch weggeschwenkt wird (natürlich nur, wenn es entsichert, also freigegeben ist). Der Kraftaufwand, mit dem der Kunde die Deichsel anhebt, wird also zugleich zum Öffnen bzw. Wegschwenken des Fixierelements genutzt. Es ist also nicht erforderlich, vor bzw. bei dem Anheben der Deichsel einen separaten Bolzen, Riegel oder dergleichen zu öffnen oder zu verschieben. Ebenso ist es nicht notwendig, einen Antrieb zum Wegschwenken des Fixierelements vorzusehen.

Eine weitere Ausgestaltung der Vorrichtung zeichnet sich aus durch eine Antriebseinrichtung, die zum Bewegen der Fixiereinrichtung, insbesondere Fixierelements, und/oder des ersten Kupplungselements zwischen der Fixierstellung und der Freigabestellung ausgebildet ist. Die Antriebseinrichtung kann einen Antriebsmotor, bevorzugt einen Linearmotor, und/oder eine Steuereinheit aufweisen. Bevorzugt ist zwar das erste Kupplungselement ortsfest angeordnet, wobei die Fixiereinrichtung dann zumindest teilweise beweglich ist. Alternativ oder zusätzlich kann vorgesehen sein, dass das erste Kupplungselement beweglich angeordnet ist, um das Fixieren bzw. Freigeben hervorzurufen, beispielsweise indem das erste Kupplungselement vertikal beweglich bzw. ausfahrbar und einfahrbar ist, um das zweite Kupplungselement in der Vorrichtung beim Ausfahren zu fixieren. Die Antriebseinrichtung dient dazu, die beschriebenen (Relativ-)Bewegungen wiederholgenau, schnell und/oder automatisiert durchzuführen.

Alternativ oder zusätzlich kann eine Antriebseinrichtung vorgesehen sein, die zum Blockieren bzw. Verschließen der Fixiereinrichtung, insbesondere des Fixierelements, und/oder des ersten Kupplungselements in der Fixierstellung und/oder der Freigabestellung ausgebildet ist. Dabei bedeutet Blockieren bzw. Verschließen beispielsweise, dass das Fixierelement wahlweise unbeweglich bzw. blockiert/verschlossen ist, vorzugsweise in seiner Fixierstellung, insbesondere wenn ein Fahrzeuganhänger mit der Vorrichtung lösbar verbunden ist. Dabei kann beispielsweise bereits eine Freigabe des zweiten Kupplungselements vorliegen, wenn das Blockieren bzw. Verschließen aufgehoben wird bzw. ist, beispielsweise so dass das zweite Kupplungselement abhebbar bzw. seine lösbare Verbindung lösbar ist und/oder so dass die Fixiereinrichtung nicht mehr fixiert bzw. fixieren kann. Beispielsweise kann die Fixiereinrichtung federbelastet sein und sich stets in der Fixierstellung befinden - zumindest wenn gerade kein zweites Kupplungselement eingelegt oder die Fixiereinrichtung händisch ausgelenkt oder bewegt wird bzw. ist - wobei das Fixieren dann durch das vorgenannte Blockieren bzw. Verschließen hervorrufbar ist. In anderen Worten dient dann die Antriebseinrichtung dazu, eine Auslenkung aus der Fixierstellung und/oder aus der Freigabestellung (wahlweise) zu unterbinden bzw. zu blockieren und wirkt letztlich in der Art eines Schlosses.

Die Antriebseinrichtung kann eine elektromechanische Sperre aufweisen bzw. als solche ausgeführt sein, wie ein beweglicher Stift, der z. B. in eine Rastung der Fixiereinrichtung und/oder in Richtung der Fixiereinrichtung ein- und ausfahren kann, um das Blockieren bzw. Verschließen hervorzurufen.

Die Vorrichtung ist bevorzugt derart ausgebildet, dass die Fixiereinrichtung, insbesondere das Fixierelement, wenigstens in der Fixierstellung und/oder wenn sie bzw. es blockiert ist nicht manuell, zumindest jedoch nicht ohne ein spezielles Werkzeug und/oder eine Befugnis, in die Freigabestellung bewegt werden kann. Beispielsweise kann die Antriebseinrichtung selbsthemmend ausgeführt sein. Alternativ oder ergänzend kann die Wirkverbindung zwischen Antriebseinrichtung und Fixiereinrichtung in der Art eines Kniehebels ausgeführt sein, wonach sichergestellt sein kann, dass die Fixierstellung verkniet bzw. versperrt ist. Ferner kann die Antriebseinrichtung zum mechanischen Blockieren der Fixiereinrichtung ausgebildet sein.

Möglich ist auch eine Ausführungsform, bei der ein rotierender Motor, insbesondere ein Asynchron- oder Synchronmotor, als Teil der Antriebseinrichtung vorgesehen ist, der beispielsweise durch ein Getriebe, insbesondere ein Schneckengetriebe, mit der Fixiereinrichtung wirkverbunden sein kann. Dabei kann der rotierende Motor die Fixiereinrichtung auf Anschlag in die Fixierstellung bzw. Freigabestellung rotieren und/oder dies drehwinkelgesteuert ausführen.

Eine weitere Ausgestaltung der Vorrichtung zeichnet sich aus durch eine Schnittstelle zur Kommunikation und/oder zur Energieübertragung zwischen der Vorrichtung und dem Fahrzeuganhänger.

Bevorzugt ist vorgesehen, dass die Vorrichtung, insbesondere die Schnittstelle der Vorrichtung, einen Befehl zum Fixieren oder einen Befehl zum Freigeben empfangen kann und an die Antriebseinrichtung übermittelt, wonach die Antriebseinrichtung eine Bewegung ausführt, die, zumindest mittelbar, zum Fixieren bzw. zum Freigeben des zweiten Kupplungselements führt. Die Schnittstelle ist demnach bevorzugt derart ausgebildet, dass ein Befehl zum Fixieren bzw. zum Freigeben kommuniziert, insbesondere empfangen, gesendet und/oder weitergeleitet werden kann. Anstelle oder ergänzend zum Fixieren bzw. Freigeben können natürlich auch das Blockieren bzw. Verschließen oder andere Aktionen durch einen Befehl hervorgerufen werden.

Nach einer weiteren Ausgestaltung der Vorrichtung ist vorgesehen, dass die Vorrichtung, insbesondere die Schnittstelle, Folgendes aufweist: eine Steckdose, vorzugsweise eine 7-polige und/oder eine 13-polige, zur elektrischen Verbindung mit dem Fahrzeuganhänger, eine Verkabelung, ein Kommunikationsmittel, einen Anschluss an eine städtische oder stationäre Energiequelle, und/oder eine Vorrichtungsenergiequelle, insbesondere Batterie und/oder Photovoltaikanlage. Im bevorzugten Fall weist die Schnittstelle wenigstens die Steckdose sowohl zur Kommunikation als auch zur Energieübertragung zwischen der Vorrichtung und dem Fahrzeuganhänger auf. Vorteilhaft können diverse handelsübliche Typen von Fahrzeuganhängern mit der Vorrichtung lösbar verbunden und über die Schnittstelle an die Vorrichtung angeschlossen werden bzw. kommunizieren.

Unter einer Schnittstelle ist ein Mittel zur Übertragung von Energie und/oder Informationen und/oder zur Kommunikation zu verstehen, das kontaktlos/kabellos und/oder kontaktiert/kabelgebunden ausgeführt sein kann. Wesentlich an einer Schnittstelle ist insbesondere, dass die Übertragung bzw. Kommunikation begonnen und auch unterbrochen werden kann. Anwendung finden können als Schnittstelle beispielsweise Mobilfunk (z.B. LTE), ein Touchscreen oder auch ein USB-Anschluss.

Eine weitere Ausgestaltung der Vorrichtung zeichnet sich aus durch ein Verankerungsmittel, insbesondere Bodenanker und/oder Bodenplatte, zur Herstellung einer Verbindung mit dem Untergrund, einen Ständer, insbesondere verbunden mit dem Verankerungsmittel, und/oder ein Gehäuse, das das erste Kupplungselement, die Fixiereinrichtung, die Antriebseinrichtung, die Schnittstelle und/oder eine Verbindung zwischen dem Ständer und dem Gehäuse wenigstens teilweise einhaust und vor Staub und/oder Wasser schützt. Vorteilhaft ist es, wenn das Verankerungsmittel am Ständer angeordnet ist, wobei der Ständer wiederum mit dem Gehäuse verschraubt bzw. verschraubbar sein kann. So kann sowohl ein kompakter Transport an einen Errichtungsort als auch ein modularer Aufbau der Vorrichtung mit verschiedenen Ständern bzw. Möglichkeiten der ortsfesten Anordnung der Vorrichtung erreicht werden.

Eine weitere Ausgestaltung der Vorrichtung zeichnet sich aus durch einen Abstand zwischen dem ersten Kupplungselement und einer Unterseite des Gehäuses und/oder der Vorrichtung, wobei die Unterseite insbesondere zum Anordnen auf der Höhe des Untergrunds vorgesehen ist und wobei der Abstand zwischen 300 mm und 500 mm, bevorzugt 430 mm +/- 35 mm, beträgt. Der vorgenannte Abstand stellt sicher, dass eine Vielzahl von handelsüblichen Fahrzeuganhängern mit der Vorrichtung lösbar verbindbar und fixierbar ist. Es kann auch vorgesehen sein, dass der Abstand einstellbar ist, beispielsweise durch Einstellmittel, insbesondere am ersten Kupplungselement, beispielsweise Verstellschrauben.

Die eingangs beschriebene Aufgabe wird auch gelöst durch ein System zum ortsfesten Fixieren und zum Freigeben eines Fahrzeuganhängers. Das System weist eine Vorrichtung und einen Fahrzeuganhänger auf, wobei die Vorrichtung ein erstes Kupplungselement, insbesondere aufweisend eine Kupplungskugel aufweist und wobei der Fahrzeuganhänger, der ein zweites Kupplungselement aufweist, das insbesondere eine Kupplungspfanne aufweist, mit dem ersten Kupplungselement lösbar verbindbar ist. Die Vorrichtung weist zudem eine Fixiereinrichtung zum ortsfesten Fixieren und zum Freigeben des Fahrzeuganhängers, insbesondere des zweiten Kupplungselements des Fahrzeuganhängers auf.

Nach einer Ausgestaltung des Systems ist vorgesehen, dass der Fahrzeuganhänger eine Energiequelle aufweist. Die Energiequelle kann zum Antreiben der Vorrichtung, insbesondere der Antriebseinrichtung, vorgesehen sein. Insbesondere ist es vorteilhaft, wenn die Energiequelle des Anhängers die primäre oder einzige Energiequelle der Vorrichtung, insbesondere der Antriebseinrichtung, ist. So kann bedarfsweise auf eine eigene ortsfeste oder stationäre Vorrichtungsenergiequelle verzichtet werden oder zumindest ein geringerer Energieverbrauch an der Vorrichtung erreicht werden, insbesondere wenn die Energiequelle des Anhängers durch ein Zugfahrzeug regelmäßig geladen wird.

Gemäß einer weiteren Ausgestaltung des Systems ist vorgesehen, dass der Fahrzeuganhänger eine weitere Schnittstelle aufweist, wobei die weitere Schnittstelle eine weitere Verkabelung, bevorzugt mit einem 7-poligen und/oder einem 13-poligen Stecker, und/oder ein weiteres Kommunikationsmittel aufweist. Die Steckdose bzw. der Stecker für die elektrische Verbindung zwischen der Schnittstelle der Vorrichtung und der weiteren Schnittstelle des Fahrzeuganhängers ist bevorzugt gemäß den oder zumindest in Anlehnung an die Normen ISO 11446-2:2012-05 und ISO 11446-1:2012-03 für die 13-polige Steckdose bzw. den 13-poligen Stecker ausgebildet. Alternativ oder ergänzend ist auch eine 7-polige Steckdose bzw. ein entsprechender Stecker gemäß ISO 1724:2003-11 und ISO 3732:2003-11 möglich, bei der Steckdose bzw. Stecker entsprechend der oder zumindest in Anlehnung an die vorgenannten Normen ausgebildet werden.

Die Schnittstelle und/oder die weitere Schnittstelle, insbesondere das Kommunikationsmittel und/oder das weitere Kommunikationsmittel kann beispielsweise aufweisen: einen zur Vorrichtung, zum System bzw. zum Fahrzeuganhänger zugehörigen Code (z. B. Barcode, QR-Code, Zahlencode, Identifikationsnummer, Rufnummer, etc.) und/oder ein oder mehrere Kommunikationsmittel bzw. Mittel zur Umsetzung von wenigstens eines von: Mobilfunk auf Basis von 1G, 2G, 3G, 4G, 5G, GPRS, EDGE, UMTS, LTE und/oder 5G; NFC, RFID, WLAN, Bluetooth, GPS, Eingabevorgängen, Audio und/oder Video (z. B. Mikrofon, Kamera, Tastatur, Touchpad, Touchscreen, Bildschirm, etc.).

Die Schnittstelle und/oder weitere Schnittstelle kann dazu ausgebildet sein, mit einer Zentrale bzw. einem Server, einem Zugfahrzeug und/oder einem Nutzer zu kommunizieren und/oder Energie zu übertragen. Die Schnittstelle und die weitere Schnittstelle können bevorzugt miteinander kommunizieren und/oder aneinander Energie übertragen.

Die Schnittstelle und/oder die weitere Schnittstelle kann einen Befehl zum Fixieren bzw. einen Befehl zum Freigeben und/oder Energie an die Antriebseinrichtung, insbesondere die Steuereinheit, bzw. die Fixiereinrichtung übermitteln, um ein Fixieren und/oder ein Freigeben hervorzurufen. Dabei kann der Befehl zum Fixieren bzw. zum Freigeben von einem Nutzer und/oder einem Server empfangen bzw. gesendet sein. Zudem kann anstelle von oder ergänzend zum Befehl zum Fixieren bzw. Befehl zum Freigeben ein Befehl zum Blockieren bzw. ein Befehl zum Verschließen, beispielsweise wie vorgenannt, übermittelt werden kann.

Insbesondere kann die weitere Schnittstelle dazu ausgebildet sein, mit der Zentrale bzw. dem Server zu kommunizieren. Beispielsweise kann die weitere Schnittstelle kontinuierlich Positionsdaten übermitteln, z. B. wenn der Fahrzeuganhänger freigegeben ist.

Nach einer weiteren Ausgestaltung des Systems ist schließlich vorgesehen, dass der Fahrzeuganhänger eine Deichsel, vorzugsweise mit einem, insbesondere vertikal verstellbaren, Stützrad, aufweist, an der das zweite Kupplungselement, vorzugsweise mit seiner Kupplungspfanne, angeordnet ist. Weiterhin kann eine Verrastungseinrichtung am Fahrzeuganhänger vorgesehen sein, die vorzugsweise als verrastender Hebel ausgebildet ist und insbesondere derart ausgebildet ist, im verrasteten Zustand ein Abheben vom ersten Kupplungselement zu verhindern bzw. zu blockieren. Dagegen kann ein Abheben möglich sein, wenn die Verrastungseinrichtung entrastet wird bzw. ist.

Beim Einsatz des beschriebenen Systems ist es insbesondere vorgesehen, dass ein Nutzer einen Fahrzeuganhänger, der mit einer Vorrichtung lösbar verbunden ist, ausfindig machen möchte und ihn vorübergehend nutzen bzw. ihn mieten möchte. Das System kann dem Nutzer, vorzugsweise auf Anfrage, seine gewünschten Informationen mitteilen, indem die Zentrale bzw. der Server, die Schnittstelle und/oder die weitere Schnittstelle zunächst seine Anfrage empfangen und beantworten. Das betrifft beispielsweise, ob bzw. wo ein Fahrzeuganhänger zu einem Zeitpunkt fixiert ist und ob dieser (oder ein anderer) Fahrzeuganhänger durch den Nutzer freigegeben werden kann. Daraufhin kann sich der Nutzer zu dem gewünschten Fahrzeuganhänger begeben. Anschließend kann der Nutzer insbesondere unter Voraussetzung von Prüfung seiner Legitimationsdaten (Führerschein, Bonität, Zahlungsdaten, etc.) den Befehl zum Freigeben des Fahrzeuganhängers seiner Wahl übermitteln, woraufhin ein Freigeben durch die Vorrichtung erfolgen und er den Fahrzeuganhänger nutzen kann.

Der Fahrzeuganhänger kann bedarfsweise mithilfe seiner weiteren Schnittstelle weiteren (potentiellen) Nutzern, der Zentrale bzw. dem Server und/oder dem Eigentümer mitteilen, ob er zum Freigeben zur Verfügung steht bzw. dass er nicht (zum Freigeben) zur Verfügung steht, insbesondere wenn er gerade von einem anderen Nutzer verwendet wird bzw. an einen anderen Nutzer vermietet ist. Ebenso kann der Fahrzeuganhänger seinen Standort bedarfsweise bzw. kontinuierlich preisgeben. Weiterhin wird der Fahrzeuganhänger zumindest in der Regel von jedem Zugfahrzeug, an das er gekuppelt bzw. mit welchem er lösbar verbunden wird und mithilfe seiner weiteren Schnittstelle angeschlossen ist, mit Energie versorgt, insbesondere wobei seine Energiequelle aufgeladen werden kann.

Insbesondere ist das System dazu ausgebildet, dass ein Nutzer einen mit der Vorrichtung lösbar verbundenen und fixierten Fahrzeuganhänger freigeben kann, sofern er durch die Zentrale bzw. den Server, die Schnittstelle und/oder die weitere Schnittstelle als dazu befugt autorisiert ist bzw. legitimiert ist. Nach dem Freigeben kann er den Fahrzeuganhänger von dem ersten Kupplungselement lösen, die Schnittstelle und die weitere Schnittstelle voneinander trennen (zumindest physikalisch insbesondere durch Trennen von Stecker und Steckdose) und den Fahrzeuganhänger schließlich zusammen mit seinem Zugfahrzeug nutzen. Danach kann der Nutzer den Fahrzeuganhänger schließlich wieder an derselben oder einer anderen Vorrichtung anordnen, lösbar mit dieser verbinden und diesen mithilfe der Fixiereinrichtung fixieren. Insbesondere kann und/oder soll der Nutzer die Schnittstelle und die weitere Schnittstelle aneinander anschließen, also beispielsweise den Stecker in die Steckdose stecken.

Insbesondere wenn ein Fahrzeuganhänger durch den Nutzer zurück zu der bzw. zu einer nicht belegten (d. h. ohne lösbar verbundenen Fahrzeuganhänger) Vorrichtung gebracht wird, sollte der Nutzer den Fahrzeuganhänger mit dem ersten Kupplungselement lösbar verbinden. Außerdem sollte der Nutzer den Stecker des Fahrzeuganhängers an die Steckdose der Vorrichtung anstecken, um eine elektrische Verbindung herzustellen. Daraufhin kann ein Fixieren ausgelöst werden. Das Fixieren kann beispielsweise automatisch geschehen, indem das System erkennt, dass ein bzw. der Fahrzeuganhänger lösbar verbunden worden ist. Sofern das Fixieren des Fahrzeuganhängers erfolgreich ausgelöst wird, schwenkt - bei einem bevorzugten Ausführungsbeispiel - das Fixierelement der Fixiereinrichtung in Richtung der Kupplungskugel und kommt bei Berührung des zweiten Kupplungselements (oder zumindest kurz davor) zum Stillstand. Sofern das zweite Kupplungselement nicht oder nicht ordnungsgemäß verbunden bzw. gekuppelt ist - woraufhin das Fixieren fehlschlagen kann - kann das Fixierelement sich zurück bewegen. Das wird beispielsweise durch einen vom Sollwert abweichenden Schwenkwinkel zwischen Freigabestellung und Fixierstellung bei einem bestimmten Fahrzeuganhänger (z. B. abhängig von Modell oder Typ des Fahrzeuganhängers bzw. des zweiten Kupplungselements) überprüft. Das anliegende Motormoment bzw. der Motorstrom kann auch hierzu dienen. Der Nutzer wird insbesondere akustisch oder visuell über ein fehlgeschlagenes Fixieren informiert und bedarfsweise neu angeleitet.

Bei der beschriebenen Nutzung des Systems durch einen Nutzer ist es bevorzugt so, dass der Nutzer das Fixieren des Fahrzeuganhängers an einer Vorrichtung nicht nur hervorrufen sollte, sondern auch hierzu auch veranlasst wird, da beispielsweise seine kostenpflichtige Mietdauer erst mit dem erfolgreichen Fixieren des Fahrzeuganhängers beendet wird. Insbesondere sollte der Nutzer den Stecker des Fahrzeuganhängers an die Steckdose der Vorrichtung anschließen, um zumindest mittelbar das Fixieren zu bewirken. Das Fixieren kann letztlich durch den Befehl zum Fixieren, der mithilfe der Schnittstelle und der weiteren Schnittstelle übermittelt wird, hervorgerufen werden. Das erfolgreiche Fixieren kann dabei von der erfolgreichen Identifikation des Fahrzeuganhängers gegenüber der Vorrichtung, dem korrekten lösbaren Verbinden des Fahrzeuganhängers mit der Vorrichtung oder weiteren, insbesondere vom Fahrzeuganhänger und/oder vom Nutzer übermittelten bzw. gemessenen, Parametern abhängen.

Die Schnittstelle und/oder die weitere Schnittstelle kann mit einem Sensor (oder auch jeweils mehreren) ausgestattet sein, um eine ordnungsgemäße Nutzung sicherzustellen. Beispielsweise kann die Beladung, die gefahrene Strecke, die gefahrene Höchstgeschwindigkeit, die Bewegungen des Fahrzeuganhängers, z. B. entlang der Fahrstrecke (Rollen, Gieren, Nicken), mithilfe von dem Sensor gemessen, von der Schnittstelle und/oder der weiteren Schnittstelle ausgewertet, insbesondere beim Fixieren und/oder Freigeben berücksichtigt und/oder an einen Server übermittelt werden.

Ebenfalls möglich ist die Ausgestaltung der Vorrichtung, bei der das erste Kupplungselement ein Kupplungsmaul und/oder ein Fangmaul aufweist, in das das eine Zugöse aufweisende zweites Kupplungselement eines Fahrzeuganhängers zumindest eingeführt werden kann. Dabei kann dann die Fixiereinrichtung mit einem Bolzen als Fixierelement vorgesehen sein, welcher die Zugöse fixieren kann. Möglich ist ferner eine Ausgestaltung der Vorrichtung, bei der das erste Kupplungselement in der Art einer Sattelzugkupplung ausgebildet ist und durch die Fixiereinrichtung fixiert werden kann.

Nachfolgend wird die Erfindung anhand einer lediglich Ausführungsbeispiele darstellenden Zeichnung näher erläutert. In der Zeichnung zeigen:
- Fig. 1:: eine erfindungsgemäße Vorrichtung in perspektivischer Ansicht,
- Fig. 2:: die Vorrichtung aus Fig. 1 im einbetonierten Zustand in Seitenansicht,
- Fig. 3:: den Bereich III aus Fig. 2 der Vorrichtung in vergrößerter Ansicht,
- Fig. 4:: ein erfindungsgemäßes System mit zwei Vorrichtungen und zwei Fahrzeuganhängern in perspektivischer Ansicht,
- Fig. 5:: den Bereich V aus Fig. 4 des Systems in vergrößerter Ansicht,
- Fig. 6:: das System aus Fig. 4 in ausschnittsweiser Seitenansicht, wobei das zweite Kupplungselement des Fahrzeuganhängers durch die Fixiereinrichtung der Vorrichtung fixiert ist,
- Fig. 7:: das System aus Fig. 6, wobei das zweite Kupplungselement freigegeben ist, und
- Fig. 8:: das System aus Fig. 6, wobei das zweite Kupplungselement freigegeben und ― bei entrasteter Verrastungsvorrichtung des Fahrzeuganhängers ― abgehoben ist.

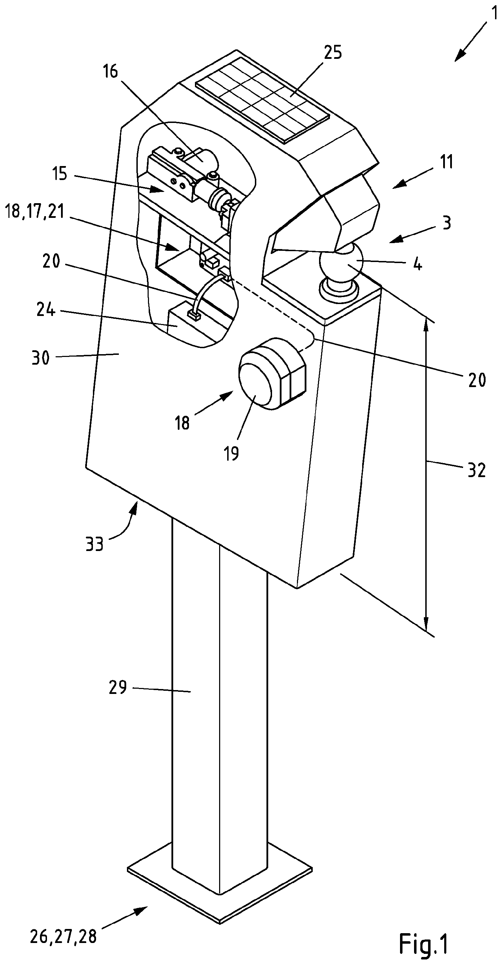

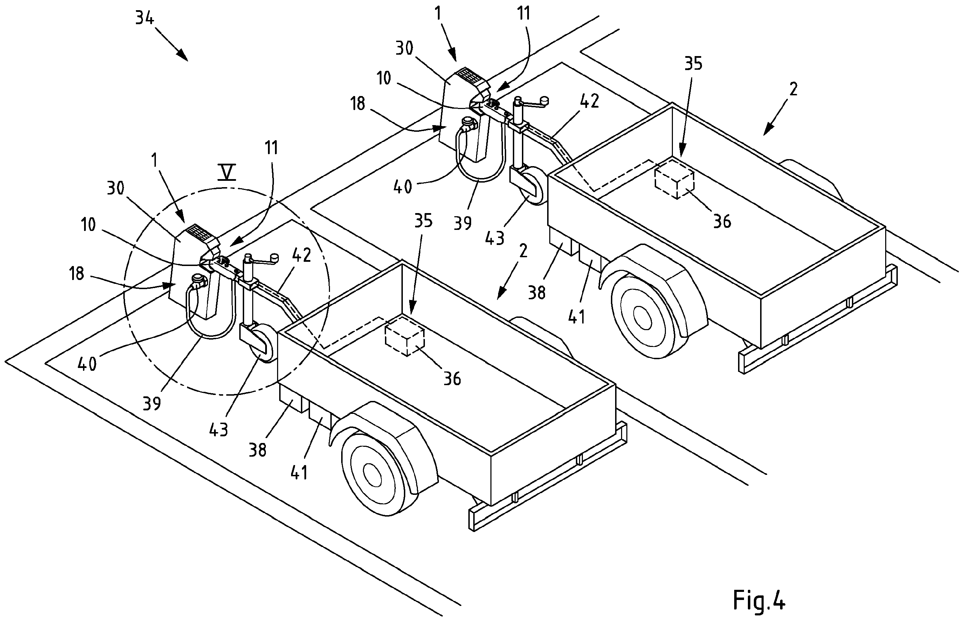

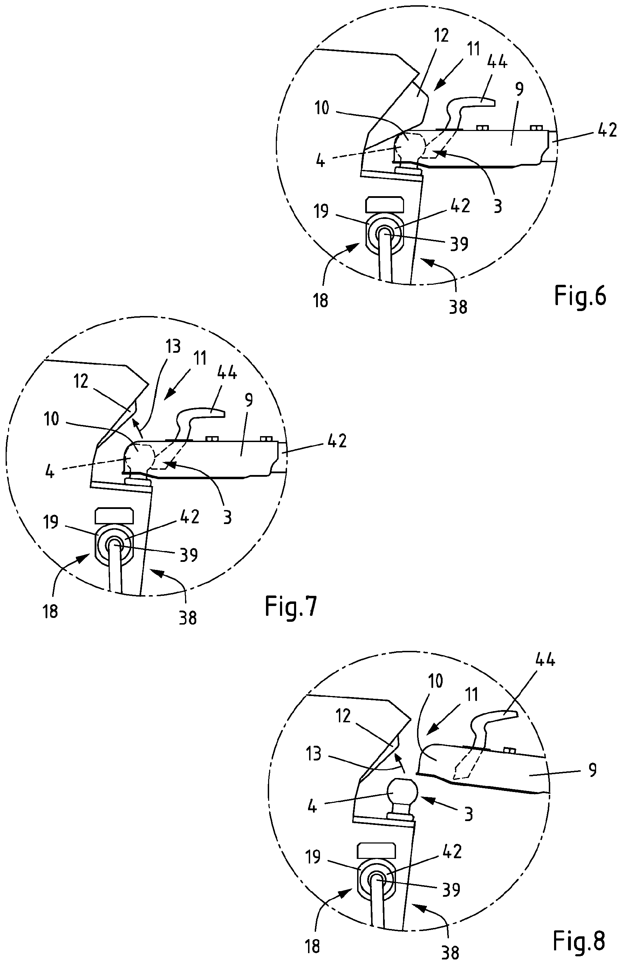

Fig. 1 bis Fig. 8 zeigen jeweils eine Vorrichtung 1 zum ortsfesten Fixieren und zum Freigeben eines Fahrzeuganhängers 2 mit einem ersten Kupplungselement 3, das eine Kupplungskugel 4 aufweist, das mit einem zweiten Kupplungselement 9, das eine Kupplungspfanne 10 aufweist, des Fahrzeuganhängers 2 lösbar verbindbar ist. Jede der in Fig. 1 bis Fig. 8 dargestellten Vorrichtungen 1 ist dabei sowohl zum ortsfesten Fixieren als auch zum Freigeben des Fahrzeuganhängers 2, wie in Fig. 4 bis Fig. 8 gezeigt, ausgebildet. Vorliegend kann das zweite Kupplungselement 9 des Fahrzeuganhängers 2 durch die Fixiereinrichtung 11 fixiert und/oder freigegeben werden bzw. fixiert und/oder freigegeben sein.

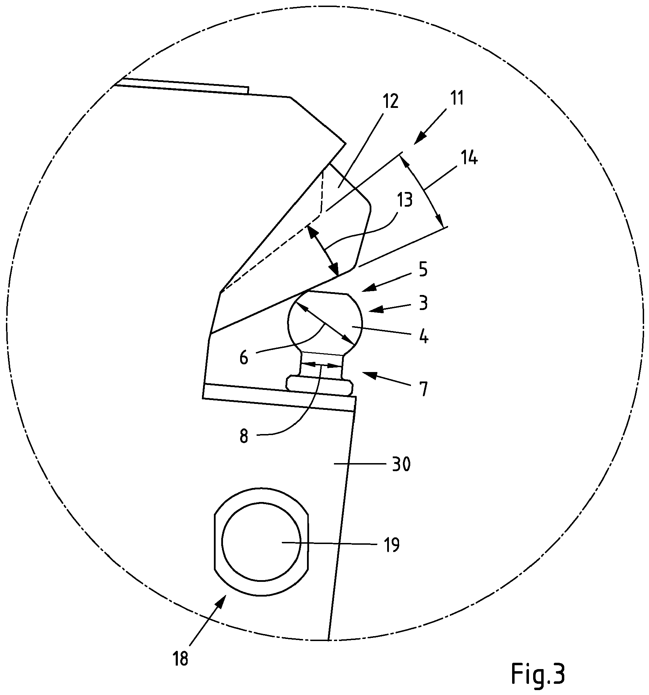

Wie insbesondere Fig. 3 zeigt, weist das die Kupplungskugel 4 aufweisende erste Kupplungselement 3 zum lösbaren Verbinden mit dem zweiten Kupplungselement 9 bzw. der Kupplungspfanne 10 einen zumindest bereichsweise kugelkalottenförmigen bzw. kugelsegmentförmigen oberen Abschnitt 5 auf, der einen Durchmesser 6 von 50 mm aufweist. Der obere Abschnitt 5 ist dabei mittig auf einem hier zylindrischen unteren Abschnitt 7 angeordnet, wobei der untere Abschnitt 7 einen Durchmesser 8 von 29 mm aufweist. Vorliegend ist der Übergang vom oberen Abschnitt 5 zum unteren Abschnitt 7 vom Mittelpunkt des oberen Abschnitts 5 (als mathematischer Mittelpunkt der umhüllenden Kreisform) 15 mm beabstandet, wobei der Übergang einen umlaufenden Innenradius von etwa 3 mm aufweist. Außerdem ist der obere Abschnitt 5 an der Oberseite abgeflacht, und zwar auf einem Durchmesser von etwa 18 mm parallel zum Übergang zum unteren Abschnitt 7. Alternativ hierzu kann auf die Abflachung des oberen Abschnitts 5 auch verzichtet werden.

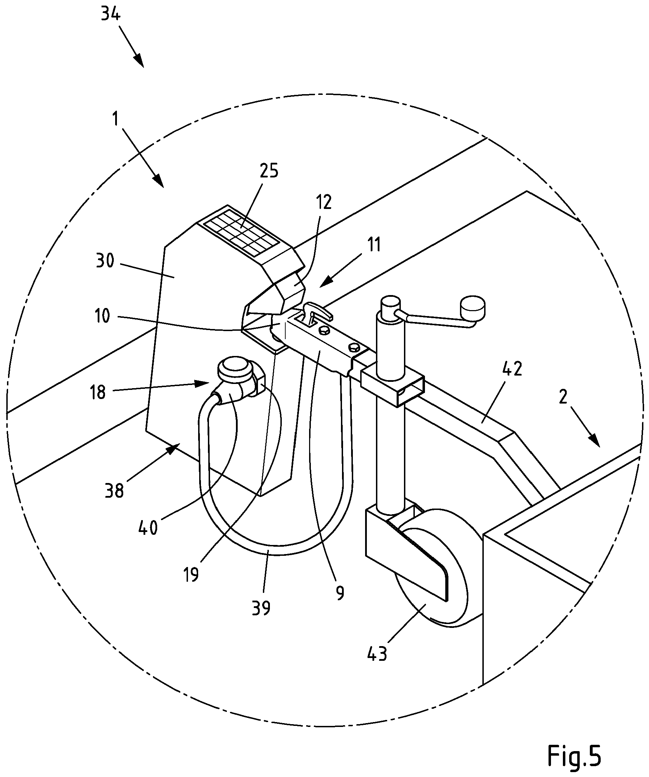

Fig. 3 zeigt weiterhin, dass das ortsfeste Fixieren und das Freigeben durch eine Relativbewegung von einem Fixierelement 12 der Fixiereinrichtung 11 und dem ersten Kupplungselement 3 zueinander hervorrufbar ist. Genauer gesagt sind die Fixiereinrichtung 11 und das erste Kupplungselement 3 jeweils derart gelagert bzw. befestigt, dass sie relativ zueinander beweglich sind. Vorliegend ist das Fixierelement 12 zwischen einer Fixierstellung und einer Freigabestellung in seiner Bewegungsrichtung 13 bewegbar, indem es in einem Winkelbereich bzw. Winkel 14 zwischen zwei Stellungen geschwenkt werden kann, wobei das erste Kupplungselement 3 unbeweglich in der Vorrichtung 1 und somit auch unbeweglich gegenüber dem Untergrund befestigt ist. Es kann also der zum Einlege- bzw. Entnahmeweg für das zweite Kupplungselement 9 erforderliche Bauraum der Vorrichtung 1 wahlweise fixiert bzw. versperrt werden. In der Fixierstellung, die insbesondere Fig. 3 und Fig. 5 zeigen, ist die Zugänglichkeit des ersten Kupplungselements 3 zumindest teilweise erschwert oder sogar unmöglich bzw. blockiert. In der Fixierstellung ist beispielsweise das zweite Kupplungselement 9 des Fahrzeuganhängers 2 an der Vorrichtung 1 fixiert und somit mit der Vorrichtung 1 verbunden (Fig. 5). Außerdem ist ein von der Vorrichtung 1 gelöstes bzw. getrenntes zweites Kupplungselement 9 in der Fixierstellung gar nicht mit dem ersten Kupplungselement 3 verbindbar. Demgegenüber ist es in der Freigabestellung möglich, das zweite Kupplungselement 9 mit dem ersten Kupplungselement 3 zu verbinden oder die beiden Kupplungselemente voneinander zu trennen (Fig. 3: gestrichelter Umriss des Fixierelements 12).

In den Ausführungsbeispielen der Fig. 1 bis Fig. 8 ist die Relativbewegung durch Rotation bzw. Schwenken eines Teils der Fixiereinrichtung 11 - hier dem Fixierelement 12 - gegenüber einem Teil des ersten Kupplungselements 3 - hier einer starr angeordneten Kupplungskugel 4 - zueinander hervorrufbar. Hierzu ist das Fixierelement 12 schwenkbar in der Vorrichtung 1 gehalten bzw. gelagert, und zwar in die Bewegungsrichtung des Fixierelements 13, wobei ein Schwenken bzw. Rotieren des Fixierelements 12 auf die Kupplungskugel 4 zu und in die umgekehrte Richtung - also von der Kupplungskugel 4 weg - möglich ist. Ein Schwenken des Fixierelements 12 führt daher dazu, dass der Abstand zur Kupplungskugel 4 entweder verringert oder vergrößert wird. Es kann daher sogar eine Klemmung zwischen Fixierelement 12 und Kupplungskugel 4 erreicht werden. Auf diese Weise kann das zweite Kupplungselement 9 an dem ersten Kupplungselement 3 fixiert werden, wenn beide Kupplungselemente 3, 9 miteinander verbunden sind, also angekuppelt sind.

Nicht in den Figuren dargestellt aber gleichwohl möglich ist eine Ausführungsform, bei der das Fixierelement 12 bzw. die Fixiereinrichtung 11 zumindest teilweise oder ausschließlich linear bzw. translatorisch verschiebbar und/oder verformbar ist. Nicht in den Figuren dargestellt, aber ebenso möglich ist es, dass (alternativ oder zusätzlich zur Bewegung der Fixiereinrichtung 11) das erste Kupplungselement 3 beweglich angeordnet ist. Dies kann beispielsweise dadurch erreicht werden, dass die Antriebseinrichtung 15 (auch) zum Bewegen des ersten Kupplungselements 3 ausgebildet ist.

Nicht in den Figuren dargestellt aber ebenfalls möglich ist eine Ausführungsform, bei der die Antriebseinrichtung 15 zum Blockieren der Fixiereinrichtung 11 ausgebildet ist und/oder bei der die Fixiereinrichtung 11 bzw. das Fixierelement 12 kraftbeaufschlagt ist, z. B. durch eine Feder oder einen Aktor, um in Richtung der Fixierstellung gedrückt zu werden.

Fig. 1 zeigt im Bereich des (teilweise geöffnet dargestellten) Gehäuses 30 der Vorrichtung 1, dass die Vorrichtung 1 eine Antriebseinrichtung 15 mit einem Antriebsmotor, hier ein Linearmotor 16, und mit einer Steuereinheit 17 für den Antriebsmotor aufweist. Die Antriebseinrichtung 15 ist zum Bewegen der Fixiereinrichtung 11 relativ zum ersten Kupplungselement 3 zwischen der Fixierstellung und der Freigabestellung ausgebildet. Es kann mehrere Fixerstellungen und Freigabestellungen geben, da das zweite Kupplungselement 9 unterschiedlich geformt und/oder angeordnet sein kann.

Die Antriebseinrichtung 15 ist fest in der Vorrichtung 1 bzw. in deren Gehäuse 30 angeordnet und steht in Wirkverbindung mit der Fixiereinrichtung 11, insbesondere mit deren Fixierelement 12. Da die Antriebseinrichtung 15 einen Linearmotor 16 aufweist, und da die Antriebseinrichtung 15 zum Schwenken des Fixierelements 12 ausgebildet ist, führt eine Bewegung der Antriebseinrichtung 15 zu einer Rotation bzw. zu einem Schwenken des Fixierelements 12.

Die Vorrichtung 1 aus Fig. 1 bis Fig. 8 weist zudem eine Schnittstelle 18 zur Kommunikation mit und zur Energieübertragung zwischen der Vorrichtung 1 und dem Fahrzeuganhänger 2 auf. Dabei kann Energie und/oder Informationen zwischen der Antriebseinrichtung 15, deren Steuereinheit 17, der Schnittstelle 18 und dem mit der Vorrichtung 1 gekuppelten bzw. verbundenen (in Fig. 4 bis Fig. 8 dargestellten) Fahrzeuganhänger 2 übertragen bzw. ausgetauscht werden. Vorliegend weist die Schnittstelle 18 eine Steckdose 19 zur elektrischen Verbindung mit dem Fahrzeuganhänger 2 und eine in der Vorrichtung 1 vorgesehene Verkabelung 20 auf. Die Steckdose 19 ist eine für die elektrische Verbindung von einem Fahrzeuganhänger 2 mit einem Zugfahrzeug typische 13-polige Steckverbindung; alternativ oder zusätzlich hierzu kann eine 7-polige Steckverbindung vorgesehen sein. Außerdem weist die Schnittstelle 18 ein Kommunikationsmittel 21 auf, das beispielsweise eine Mobilfunkverbindung herstellen kann.

Die Vorrichtung 1 aus Fig. 1 bis Fig. 8 weist weiterhin eine Vorrichtungsenergiequelle auf. Die Vorrichtungsenergiequelle weist hier eine Batterie 24 bzw. einen Akkumulator auf. Zudem weist die Vorrichtungsenergiequelle vorliegend eine Photovoltaikanlage 25 auf, die hier mit einer Solarzelle ausgestattet ist und zur Umwandlung von Energie aus Tageslicht bzw. Sonnenlicht in elektrische Energie ausgebildet ist, die in der Batterie 24 gespeichert werden kann. Es kann vorgesehen sein, dass eine (z.B. in der Umgebung der Vorrichtungen 1 angeordnete) Photovoltaikanlage 25 und eine (z.B. in einer der Vorrichtungen 1 angeordnete) Batterie 24 mehrere Vorrichtungen 1 mit Energie versorgen

Die Verkabelung 20 verbindet die Antriebseinrichtung 15, die Steckdose 19, das Kommunikationsmittel 21 und die Vorrichtungsenergiequelle physikalisch bzw. elektrisch miteinander, so dass Energie bzw. Informationen (z.B. der Befehl zur Freigabe bzw. der Befehl zum Fixieren) übermittelbar sind.

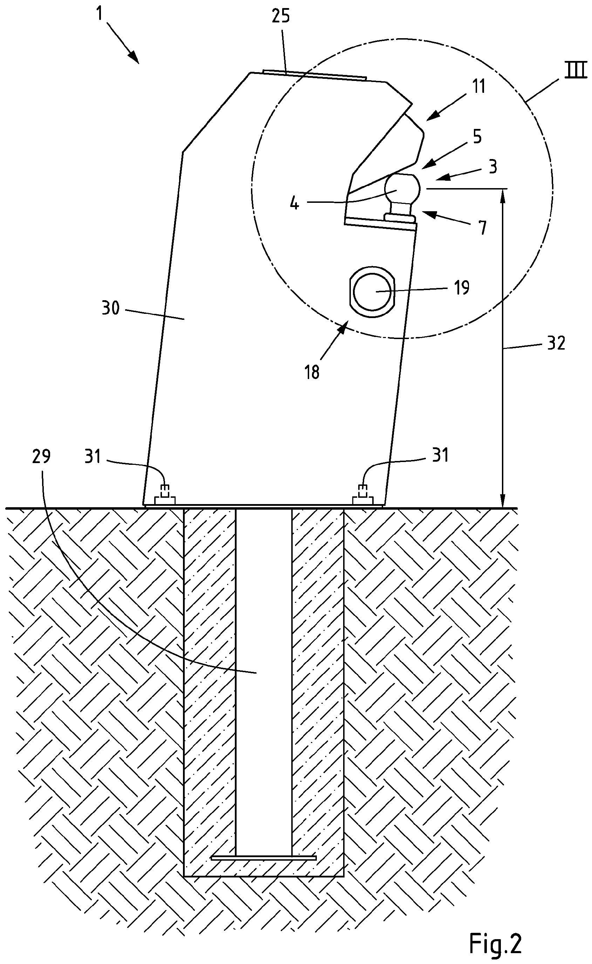

Die Vorrichtung 1 aus Fig. 1 bis Fig. 8 weist zudem ein Verankerungsmittel 26 auf, das als Bodenanker 27 und zugleich als Bodenplatte 28 ausgebildet ist, um eine Verbindung mit dem Untergrund herzustellen. Insbesondere zeigen Fig. 1 und Fig. 2 das Verankerungsmittel 26, das einen Formschluss bei einer zumindest näherungsweise vollständigen Einbetonierung herstellt. Alternativ oder zusätzlich ist es möglich, das Verankerungsmittel 26 als eine Verschraubungsmöglichkeit auszubilden bzw. mit einer solchen auszustatten, so dass eine Verschraubung der Vorrichtung 1 mit dem Untergrund möglich ist.

Zudem weist die Vorrichtung 1 ein Gehäuse 30 auf, das das erste Kupplungselement 3 mit der Kupplungskugel 4, die Fixiereinrichtung 11 mit dem Fixierelement 12, die Antriebseinrichtung 15 mit dem Linearmotor 16 und der Steuereinheit 17, und die Schnittstelle 18 mit der Steckdose 19, der Verkabelung 20, dem Kommunikationsmittel 21 und der Vorrichtungsenergiequelle zumindest teilweise einhaust - also in sich aufnimmt - und somit vor Staub und Wasser, insbesondere auch vor Vandalismus, schützt. Das Gehäuse 30 kann mehrteilig ausgeführt sein.

Der in Fig. 1 und in Fig. 2 gezeigte Ständer 29 der Vorrichtung 1 ist mit der gegenüberliegend vom ersten Kupplungselement 3 vorgesehenen Unterseite 33 des Gehäuses 30 fest verbunden. Der Ständer 29 weist das Verankerungsmittel 26 auf, wobei es mit dem Verankerungsmittel 26 fest verbunden, beispielsweise verschweißt ist.

Das Gehäuse 30 weist im oberen Bereich eine Aussparung auf, über die die Fixiereinrichtung 11 und das erste Kupplungselement 3 zumindest teilweise zugänglich sind, so dass der Fahrzeuganhänger 2 mit seinem zweiten Kupplungselement 9 (lösbar) mit der Vorrichtung 1 verbunden bzw. an ihr fixiert und auch wieder freigegeben bzw. gelöst werden kann. Außerdem ist am Gehäuse 30 die Steckdose 19 der Schnittstelle 18 zum Anschluss des Fahrzeuganhängers 2 angeordnet und somit ebenfalls gut zugänglich. Über die Steckdose 19 kann die Vorrichtung 1 (und/oder auch der Fahrzeuganhänger 2) mit Energie versorgt werden. Über die Steckdose 19 können ebenfalls Informationen oder Befehle übermittelt werden, beispielsweise der Befehl zum Fixieren und/oder der Befehl zum Freigeben oder auch Informationen zur Identifikation (insb. des Nutzers und/oder des Fahrzeuganhängers 2) oder zum Ladezustand des Fahrzeuganhängers 2.

Das erste Kupplungselement 3 bzw. dessen Kupplungskugel 4 ist vorliegend auf der betriebsüblichen Höhe des zweiten Kupplungselements 9 des Fahrzeuganhängers 2 angeordnet, hier auf einer Höhe von 430 mm +/- 35 mm. Das bewirkt, dass der mit der Vorrichtung 1 lösbar verbundene Fahrzeuganhänger 2 zumindest im Wesentlichen horizontal bzw. parallel zum Untergrund an der Vorrichtung 1 fixiert werden kann. In anderen Worten beträgt der Abstand 32 zwischen dem Mittelpunkt des oberen Abschnitts des ersten Kupplungselements 3, also insbesondere der Kupplungskugel 4, und der gegenüberliegend vom ersten Kupplungselement 3 vorgesehenen Unterseite 33 des Gehäuses 30, welche, wie Fig. 2 zeigt, zum Anordnen auf der Höhe des Untergrunds vorgesehen ist, 430 mm +/- 35 mm. Dabei wird der Abstand 32 beispielsweise vom Kontaktpunkt bzw. Auflagepunkt vom zweiten Kupplungselement 9 des Fahrzeuganhängers 2 aus bis zur Unterseite 33 des Gehäuses 30 bestimmt.

Fig. 4 zeigt ein System 34, das zwei baugleiche Vorrichtungen 1 zum Fixieren und zum Freigeben jeweils eines Fahrzeuganhängers 2 aufweist. Bereits zuvor im Zusammenhang mit der Vorrichtung 1 beschriebene Merkmale sind in Fig. 4 und allen anderen das System 34 betreffenden Figuren mit entsprechenden Bezugszeichen versehen. Die dargestellten Vorrichtungen 1 weisen jeweils ein erstes Kupplungselement 3 mit einer Kupplungskugel 4 auf. Das System 34 weist ebenfalls zwei baugleiche Fahrzeuganhänger 2 mit jeweils einem eine Kupplungspfanne 10 aufweisenden zweiten Kupplungselement 9 auf, wobei das zweite Kupplungselement 9 jeweils mit dem ersten Kupplungselement 3 lösbar verbindbar und vorliegend auch verbunden ist. Dabei weisen die Vorrichtungen 1 jeweils eine Fixiereinrichtung 11 zum ortsfesten Fixieren und zum Freigeben des Fahrzeuganhängers 2, hier des zweiten Kupplungselements 9 des Fahrzeuganhängers 2, das als Zugkugelkupplung mit der Kupplungspfanne 10 ausgebildet ist, auf.

Die beiden in Fig. 4 dargestellten Fahrzeuganhänger 2 weisen jeweils eine Energiequelle 35 auf, die eine Batterie 36 bzw. einen Akkumulator aufweist. Die Energiequelle 35 ist jeweils zum Antreiben der Antriebseinrichtung 15 der Vorrichtung 1 vorgesehen bzw. ausgebildet, um die Fixiereinrichtung 11 zu bewegen, für den Fall, dass der Befehl zur Freigabe bzw. der Befehl zum Fixieren (bzw. Blockieren/Verschließen) übermittelt ist oder vorliegt. Hierzu weisen die Fahrzeuganhänger 2 jeweils eine weitere Schnittstelle 38 mit jeweils wenigstens einer weiteren Verkabelung 39 auf, wobei ebenfalls jeweils ein weiteres Kommunikationsmittel 41 zur Kommunikation mit der Zentrale bzw. dem Server über Mobilfunk vorgesehen ist (z.B: auf Basis von 3G, 4G und/oder 5G). Die Energiequelle 35 ist dabei mithilfe eines Steckers 40 an der weiteren Verkabelung 39 an die Steckdose 19 der Vorrichtung 1 angeschlossen bzw. damit elektrisch verbunden. Der Anschluss der weiteren Verkabelung 39 an die Steckdose 19 der Vorrichtung 1 besteht, solange der Fahrzeuganhänger 2 bzw. das zweite Kupplungselement 9 mit der Vorrichtung 1 verbunden ist. Auf diese Weise kann der Fahrzeuganhänger 2 die einzige bzw. primäre Energiequelle 35 der Vorrichtung 1 bzw. der Antriebseinrichtung 15 darstellen. Die Vorrichtung 1 weist zwar die Vorrichtungsenergiequelle mit der Batterie 24 und der Photovoltaikanlage 25 auf, kann aber primär durch den angeschlossenen Fahrzeuganhänger 2 und dessen Energiequelle 35 mit Energie versorgt werden, so dass die Vorrichtung nicht zwingend an ein Stromnetz angeschlossen sein muss.

Der Fahrzeuganhänger 2 weist zudem eine Deichsel 42 auf, die ein höhenverstellbares bzw. vertikal verstellbares Stützrad 43 hat. Zudem ist an der Deichsel 42 das zweite Kupplungselement 9 mit der Kupplungspfanne 10 vorgesehen. Der Fahrzeuganhänger 2 weist auch wenigstens eine Fahrzeugachse auf, an der zwei Räder drehbar gelagert sind.

Das zweite Kupplungselement 9 des Fahrzeuganhängers 2 weist eine als verrastender Hebel ausgebildete Verrastungseinrichtung 44 auf, die typischerweise für die Verrastung beim lösbaren Verbinden mit einem Zugfahrzeug bzw. Ankuppeln an ein Zugfahrzeug vorgesehen ist. Die Verrastungseinrichtung 44 ist dazu ausgebildet, ein vertikales Abheben von dem ersten Kupplungselement 3 zu verhindern, indem sie in einen verrasteten Zustand versetzt wird.

### Bezugszeichenliste:

- 1:: Vorrichtung
- 2:: Fahrzeuganhänger
- 3:: Erstes Kupplungselement
- 4:: Kupplungskugel
- 5:: Oberer Abschnitt (der Kupplungskugel 4)
- 6:: Durchmesser oberer Abschnitt
- 7:: Unterer Abschnitt (der Kupplungskugel 4)
- 8:: Durchmesser unterer Abschnitt
- 9:: Zweites Kupplungselement
- 10:: Kupplungspfanne
- 11:: Fixiereinrichtung
- 12:: Fixierelement
- 13:: Bewegungsrichtung des Fixierelements
- 14:: Winkel zwischen zwei Stellungen
- 15:: Antriebseinrichtung
- 16:: Linearmotor
- 17:: Steuereinheit
- 18:: Schnittstelle
- 19:: Steckdose
- 20:: Verkabelung
- 21:: Kommunikationsmittel
- 24:: Batterie (der Vorrichtung 1)
- 25:: Photovoltaikanlage (der Vorrichtung 1)
- 26:: Verankerungsmittel
- 27:: Bodenanker
- 28:: Bodenplatte
- 29:: Ständer
- 30:: Gehäuse
- 31:: Verschraubung
- 32:: Abstand
- 33:: Unterseite
- 34:: System
- 35:: Energiequelle
- 36:: Batterie (des Fahrzeuganhängers 2)
- 37:: Photovoltaikanlage (des Fahrzeuganhängers 2)
- 38:: Weitere Schnittstelle
- 39:: Weitere Verkabelung
- 40:: Stecker
- 41:: Weiteres Kommunikationsmittel
- 42:: Deichsel
- 43:: Stützrad
- 44:: Verrastungseinrichtung

## Patentansprüche

1. Vorrichtung (1) zum ortsfesten Fixieren und zum Freigeben eines Fahrzeuganhängers (2), mit einem ersten Kupplungselement (3), insbesondere aufweisend eine Kupplungskugel (4), das mit einem zweiten Kupplungselement (9), insbesondere aufweisend eine Kupplungspfanne (10), eines Fahrzeuganhängers (2) lösbar verbindbar ist,
**gekennzeichnet durch**
eine Fixiereinrichtung (11) zum ortsfesten Fixieren und zum Freigeben des Fahrzeuganhängers (2), insbesondere des zweiten Kupplungselements (9) des Fahrzeuganhängers (2).

2. Vorrichtung nach Anspruch 1,
**dadurch gekennzeichnet, dass** das insbesondere eine Kupplungskugel (4) aufweisende erste Kupplungselement (3) zum lösbaren Verbinden mit dem zweiten Kupplungselement (9) einen insbesondere kugelkalottenförmigen oberen Abschnitt (5) aufweist, der zumindest im Wesentlichen einen Durchmesser (6) zwischen 40 mm und 60 mm, bevorzugt zwischen 45 mm und 55 mm, insbesondere von etwa 50 mm aufweist, und/oder
- einen insbesondere zylindrischen unteren Abschnitt (7) aufweist, der zumindest im Wesentlichen einen Durchmesser (8) bis zu 35 mm aufweist, insbesondere 29 +/- 2 mm beträgt.

3. Vorrichtung nach Anspruch 1 oder Anspruch 2,
**dadurch gekennzeichnet, dass** die Fixiereinrichtung (11) und/oder das erste Kupplungselement (3) derart gelagert sind/ist, dass die Fixiereinrichtung (11) und das erste Kupplungselement (3) relativ zueinander bewegbar sind und, insbesondere, zwischen einer Fixierstellung und einer Freigabestellung bewegbar, verschiebbar und/oder schwenkbar sind.

4. Vorrichtung nach einem der voranstehenden Ansprüche,
**dadurch gekennzeichnet, dass** die Fixiereinrichtung (11) ein Fixierelement (12) aufweist, das zwischen einer Fixierstellung und einer Freigabestellung in einer Bewegungsrichtung (13) bewegbar ist, indem es in einem Winkelbereich bzw. Winkel (14) zwischen zwei Stellungen geschwenkt werden kann, insbesondere durch vertikales Abheben des zweiten Kupplungselements (9) des Fahrzeuganhängers (2) von dem ersten Kupplungselement (3).

5. Vorrichtung nach Anspruch 4,
**dadurch gekennzeichnet, dass** das Fixierelement (12) derart schwenkbar in der Vorrichtung (1) gehalten bzw. gelagert ist, dass ein Schwenken bzw. Rotieren des Fixierelements (12) auf die Kupplungskugel (4) zu und von der Kupplungskugel (4) weg möglich ist.

6. Vorrichtung nach einem der voranstehenden Ansprüche,
**gekennzeichnet durch**
eine Antriebseinrichtung (15), die zum Bewegen der Fixiereinrichtung (11) und/oder des ersten Kupplungselements (3) zwischen der Fixierstellung und der Freigabestellung ausgebildet ist.

7. Vorrichtung nach einem der voranstehenden Ansprüche,
**gekennzeichnet durch**
eine Schnittstelle (18) zur Kommunikation und/oder zur Energieübertragung zwischen der Vorrichtung (1) und dem Fahrzeuganhänger (2).

8. Vorrichtung nach einem der voranstehenden Ansprüche,
**dadurch gekennzeichnet, dass** die Vorrichtung (1), insbesondere die Schnittstelle (18), Folgendes aufweist:
- eine Steckdose (19), vorzugsweise eine 7-polige und/oder eine 13-polige, zur elektrischen Verbindung mit dem Fahrzeuganhänger (2),
- eine Verkabelung (20),
- ein Kommunikationsmittel (21),
- einen Anschluss an eine städtische oder stationäre Energiequelle, und/oder
- eine Vorrichtungsenergiequelle, insbesondere Batterie (24) und/oder Photovoltaikanlage (25).

9. Vorrichtung nach einem der voranstehenden Ansprüche,
**gekennzeichnet durch**
- ein Verankerungsmittel (26), insbesondere Bodenanker (27) und/oder Bodenplatte (28), zur Herstellung einer Verbindung mit dem Untergrund,
- einen Ständer (29), insbesondere verbunden mit dem Verankerungsmittel (26), und/oder
- ein Gehäuse (30), das das erste Kupplungselement (3), die Fixiereinrichtung (11), die Antriebseinrichtung (15), die Schnittstelle (18) und/oder eine Verbindung zwischen dem Ständer (29) und dem Gehäuse (30) wenigstens teilweise einhaust und vor Staub und/oder Wasser schützt.

10. Vorrichtung nach einem der voranstehenden Ansprüche,
**gekennzeichnet durch**
einen Abstand (32) zwischen dem ersten Kupplungselement (3) und einer Unterseite (33) des Gehäuses (30) und/oder der Vorrichtung (1), wobei die Unterseite (33) insbesondere zum Anordnen auf der Höhe des Untergrunds vorgesehen ist und wobei der Abstand (32) zwischen 300 mm und 500 mm, bevorzugt 430 mm +/- 35 mm, beträgt.

11. System (34) zum ortsfesten Fixieren und zum Freigeben eines Fahrzeuganhängers (2), aufweisend:
- eine Vorrichtung (1), insbesondere nach einem der voranstehenden Ansprüche ausgebildet, mit einem ersten Kupplungselement (3), insbesondere aufweisend eine Kupplungskugel (4), und
- einen Fahrzeuganhänger (2), mit einem zweiten Kupplungselement (9), insbesondere aufweisend eine Kupplungspfanne (10), das mit dem ersten Kupplungselement (3) lösbar verbindbar ist,
**dadurch gekennzeichnet, dass** die Vorrichtung (1) eine Fixiereinrichtung (11) zum ortsfesten Fixieren und zum Freigeben des Fahrzeuganhänger (2), insbesondere des zweiten Kupplungselements (9) des Fahrzeuganhänger (2), aufweist.

12. System nach Anspruch 11,
**dadurch gekennzeichnet, dass** der Fahrzeuganhänger (2) eine Energiequelle (35) aufweist.

13. System nach Anspruch 12,
**dadurch gekennzeichnet, dass** die Energiequelle (35) zum Antreiben der Vorrichtung (1), vorzugsweise einer Antriebseinrichtung (15), insbesondere die zum Bewegen der Fixiereinrichtung (11) und/oder des ersten Kupplungselements (3) zwischen einer Fixierstellung (13) und einer Freigabestellung (14) ausgebildet ist, vorgesehen ist.

14. System nach einem der Ansprüche 11 bis 13,
**dadurch gekennzeichnet, dass** der Fahrzeuganhänger (2) eine weitere Schnittstelle (38) aufweist, wobei die weitere Schnittstelle (38) eine weitere Verkabelung (39), bevorzugt mit einem 7-poligen und/oder einem 13-poligen Stecker (40), und/oder ein weiteres Kommunikationsmittel (41) aufweist.

15. System nach einem der Ansprüche 11 bis 14,
**dadurch gekennzeichnet, dass** der Fahrzeuganhänger (2) eine Deichsel (42), vorzugsweise mit einem, insbesondere vertikal verstellbaren, Stützrad (43), aufweist, an der das zweite Kupplungselement (9), vorzugsweise mit seiner Kupplungspfanne (10), angeordnet ist.
